# EUROPÄISCHE PATENTANMELDUNG

(11) **EP 1 662 836 A2**
(43) Veröffentlichungstag der Anmeldung: **31.05.2006**
(21) Anmeldenummer: 05025217.0
(22) Anmeldetag: 18.11.2005
(51) Int. Cl.: H04Q 7/38

(54) **Verfahren zum Durchführen von Handover- und Roaming-Prozeduren in Funknetzen**

(30) Priorität: 26.11.2004 DE 102004057387
(71) Anmelder: DLR Deutsches Zentrum für Luft- und Raumfahrt e.V., 51147 Köln (DE)
(72) Erfinder: Kammann, Jens, 82205 Gilching (DE); Angermann, Michael, 82166 Gräfelfing (DE)
(74) Vertreter: von Kirschbaum, Albrecht

(57) **Zusammenfassung**

Zum Durchführen von Handover- und Roaming-Prozeduren zwischen einem mobilen Funk-Kommunikationsendgerät eines Nutzers (N; N1, N2, N3) und Zugriffsstationen, die verschiedenen Funknetzen (UMTS, BT, WLAN) angehören können, greift das mobile Funk-Kommunikationsendgerät des Nutzers über eine beliebige verfügbare Netzwerkanbindung auf eine zentrale, netzübergreifende Datenbank (DB) zurück, in der alle am augenblicklichen Ort des Nutzers erreichbaren Funknetze und deren Zugangsparameter als Informationen enthalten sind. Die Befüllung der Datenbank mit diesen und möglicherweise noch weiteren Informationen erfolgt entweder durch deren Betreiber oder durch Beobachtungen und Feedback derjenigen mobilen Nutzer, die das Verfahren einsetzen. Auf der Grundlage dieser aus der Datenbank erhaltenen Informationen wird mittels eines Programms auf dem mobilen Funk-Kommunikationsendgerät des Nutzers das jeweils geeignete Zugangsfunknetz ohne weitere notwendige Interaktionen des Nutzers ausgewählt.

Anwendung bei öffentlichen drahtlosen Internetzugängen, netzübergreifenden ortsabhängigen Diensten und bei Ad-hoc-Vernetzung.

## Beschreibung

Die vorliegende Erfindung betrifft ein Verfahren zum Durchführen von Handover- und Roaming-Prozeduren zwischen einem mobilen Funk-Kommunikationsendgerät eines Nutzers und Zugriffsstationen, die verschiedenen, unterschiedlich verwalteten und/oder zugangstechnologisch unterschiedlich ausgelegten Funknetzen angehören können.

Heutzutage betriebene und auch geplante Mobilfunknetze ermöglichen eine Handover-Prozedur, d.h. eine Verbindungsübergabe, gemäß den jeweiligen Spezifikationen innerhalb des jeweiligen Netzes und eine Roaming-Prozedur mit Partnernetzen, d.h. eine netzübergreifende Verbindungsübergabe, sofern das jeweilige Heimatnetz und das betreffende Partnernetz funktionierende Kommunikationsverbindungen unterhalten und administrativ eine Einigung erreicht wurde. Kurzreichweitenfunknetze, wie z.B. Bluetooth-Netze oder Wireless LAN-Netze, implementieren Handover- und Roaming-Prozeduren meist proprietär oder auf Applikationsebene mit unmittelbarer Nutzer-Interaktion, die beispielsweise in einer Authentifizierung am Zugangspunkt über einen Webbrowser bestehen kann. Einzelheiten über den Ablauf derartiger Prozeduren sind in den Mobilfunk-Spezifikationen, z.B. ETSI, und in den Spezifikationen für Kurzreichweitenfunk (Bluetooth, Wireless LAN, HomeRF) enthalten.

Aus DE 101 45 753 Al ist z.B. ein Verfahren zur Unterstützung einer Handover- und Roaming-Prozedur in einem Mehrzellenfunksystem auf Basis des Bluetooth-Standards bekannt. Hierbei wird zunächst die Sende-Feldstärke von im Empfangsbereich eines mobilen Endgeräts liegenden Zugriffspunkten auf Grundlage einer gemäß dem Bluetooth-Standard im Endgerät vorgesehenen Verbindungsqualitätsüberwachung gemessen; dann werden die Zugriffspunkte nach gemessener Sende-Feldstärke bewertet und schließlich wird für eine Handover- oder Roaming-Prozedur derjenige Zugriffspunkt ausgewählt, für den das Handgerät zu Gunsten einer optimalen Verbindung in seiner aktuellen Position die größte Sende-Feldstärke misst. Da es sich also hier um eine Handover- und Roaming-Prozedur innerhalb eines reinen Bluetooth-Funknetzes handelt, ist eine Nutzung von verschiedenen Funknetzen mit unterschiedlicher Verwaltung und/oder unterschiedlicher Zugangstechnik damit nicht möglich.

Aus US 6 167 250 ist ein Verfahren zum Ermitteln von Tarifraten bekannt, die von wenigstens zwei Kandidaten-Anbietern für drahtlose Dienste berechnet werden, auf die ein Roaming-Mobil-Terminal zugreifen kann. Hierbei wird eine Registrierung an einem ersten Kandidaten-Dienst-Anbieter durch das Mobil-Telefon durchgeführt. Anschließend wird eine Aufforderung nach Teilnehmerinformation zusammen mit der beabsichtigten Tarifrate, die von dem ersten Kandidaten-Dienstanbieter berechnet wird an den Heimatdienstanbieter gesendet, der zu dem Mobilterminal gehört. Es wird wenigstens ein zweiter Kandidaten-Dienstanbieter bestimmt, auf den das Mobilterminal zugreifen kann. Schließlich werden Tarifraten von dem zweiten Kandidaten-Dienstanbieter durch den Heimat-Dienstanbieter ermittelt.

Aus DE 102 61 201 A1 ist ein Verfahren zu Herstellung einer Verbindung zwischen einer Mobilstation und einem Kommunikatikonsnetzwerk bekannt, bei welchem eine Verbindung zwischen der Mobilstation und dem Netzwerk nach Auswahl der Verbindungsparameter über einen Zugangspunkt durchgeführt wird. Hierzu erfolgt eine automatische Erkennung nutzbarer Verbindungsmöglichkeiten zu unterschiedlichen Netzwerken in unterschiedlichen Standards und Frequenzbändern, indem nach Auswahl eines ersten Standards eine Überprüfung der Verbindungsmöglichkeiten innerhalb dieses Standards durchgeführt wird. Anschließend wird ein zweiter Standard ausgewählt, indem ebenfalls eine Überprüfung der Verbindungsmöglichkeit erfolgt. Zu dem erfolgt eine Speicherung von dem Standard, mit dem eine Verbindungsmöglichkeit gefunden wurde, kennzeichnenden Parametern. Der Aufbau einer Verbindung zu einem Zugangspunkt, bei welcher über ein Standard kommuniziert wird, wird nach Auswahlkriterien programmgesteuert oder manuell ausgeführt.

Bei den bisher bekannten Verfahren zur Durchführung von Handover- oder Roaming-Prozeduren mit Zugriffsmöglichkeit auf verschiedene Funknetze (Inter-Netzwerk-Handover; Inter-Netzwerk-Roaming) wird eine unmittelbare Interaktion mit dem Nutzer benötigt, z.B. durch Eingabe von Nutzerdaten oder durch Änderungen von im Betriebssystem des mobilen Funk-Kommunikationsendgerätes des Nutzers hinterlegten Einstellungen.

Der vorliegenden Erfindung liegt nunmehr die Aufgabe zu Grunde, zum Durchführen von Handover- und Roaming-Prozeduren ein Verfahren zu schaffen, das eine kostengünstige, unterbrechungsfreie Nutzung von Funknetzen mit unterschiedlicher physikalischer Zugangstechnik oder von Funknetzen mit gleicher physikalischer Zugangstechnik, aber unabhängiger Administration erlaubt.

Gemäß der vorliegenden Erfindung, die sich auf ein Verfahren zum Durchführen von Handover- und Roaming-Prozeduren der eingangs genannten Art bezieht, wird diese Aufgabe in vorteilhafter Weise dadurch gelöst, dass das mobile Funk-Kommunikationsendgerät des Nutzers über eine beliebige verfügbare Netzwerkanbindung auf eine zentrale, netzübergreifende Datenbank zurückgreift, in der die am augenblicklichen Ort des Nutzers erreichbaren Funknetze und deren Zugangsparameter als Informationen enthalten sind, dass die Befüllung der Datenbank mit diesen Informationen entweder durch deren Betreiber oder durch Beobachtungen und Feedback derjenigen mobilen Funk-Kommunikationsendgeräte oder Zugriffsstationen vorgenommen wird, die das Verfahren einsetzen, und dass auf der Grundlage dieser aus der Datenbank erhaltenen Informationen das jeweils geeignete Zugangsfunknetz ohne weitere notwendige Interaktionen des Nutzers ausgewählt wird.

Vorteilhafte und zweckmäßige Weiterbildungen des Verfahrens nach der vorliegenden Erfindung sind in den sich unmittelbar oder mittelbar auf den Patentanspruch 1 rückbeziehenden Unteransprüchen angegeben.

In vorteilhafter Weise sind in der zentralen, netzübergreifenden Datenbank außer den dort registrierten Funknetzen und deren Zugangsparametern als Informationen auch noch die Netzeigenschaften der verschiedenen registrierten Funknetze und deren orts-, zeit- und lastabhängige Netzverfügbarkeitsmerkmale aufgenommen.

Zweckmäßig werden zur gezielten Auswahl eines Funknetzes "Nachbarschaftslisten" für mobile Funk-Kommunikationsendgeräte von einer zentralen Instanz auf Anfrage des mobilen Nutzers für einen bestimmten Ort bereitgestellt.

Vorteilhaft ist auch, dass die auf der Grundlage der aus der Datenbank erhaltenen Informationen mittels eines Programms auf dem mobilen Funk-Kommunikationsgerät des Nutzers das jeweils geeignete Zugangsfunknetz ausgewählt wird.

In der Datenbank lässt sich zwischen Netzbetreibern und Internetzugängen unterscheiden, so dass beispielsweise günstige lokale Internetzugänge gegenüber netzwerkweiten Zugängen eines oder mehrerer Betreiber bevorzugt werden können, bzw. der günstigste Zugang ein und desselben Anbieters gewählt wird, wenn dieser beispielsweise unterschiedliche Tarife oder verschiedene, z.B. leitungsvermittelte oder paketvermittelte Datenträger anbietet.

In vorteilhafter Weise kann eine Schnittstelle für die Integration von Optimierungsverfahren zur Auswahl eines Funknetzes vorgesehen werden. Ein solches Optimierungsverfahren kann die höchstmögliche Verfügbarkeit und/oder die niedrigsten Übertragungskosten der beteiligten Funknetze betreffen.

Das Verfahren nach der vorliegenden Erfindung lässt sich vorteilhaft in zellularen Mobilfunknetzen, wie z.B. in GSM-Netzen oder UMTS-Netzen, und in Kurzreichweitenfunknetzen, wie z.B. in Bluetooth-Netzen, Wireless LAN-Netzen oder HomeRF-Netzen einsetzen. Von besonderem Interesse ist das Verfahren gemäß der vorliegenden Erfindung im Zusammenhang mit öffentlichen drahtlosen Internetzugängen (Hotspots), mit netzübergreifenden ortsabhängigen Diensten und bei einer Ad-hoc-Vernetzung.

Die Erfindung wird im Folgenden anhand eines durch Zeichnungen zusätzlich veranschaulichten Beispiels mit drei sich in ihrem Versorgungsgebiet teilweise überlappenden Funknetzen unterschiedlicher Technologien erläutert. Es zeigen:
- Fig.1: in einer schematischen Darstellung die Befüllung einer den verschiedenen Funknetzen zugeteilten Datenbank, und
- Fig.2: ebenfalls in einer schematischen Darstellung die Anfrage eines mobilen Nutzers mit Funk-Kommunikationsendgerät nach verfügbaren Funknetzen in seiner Umgebung mit passender Datenbankantwort.

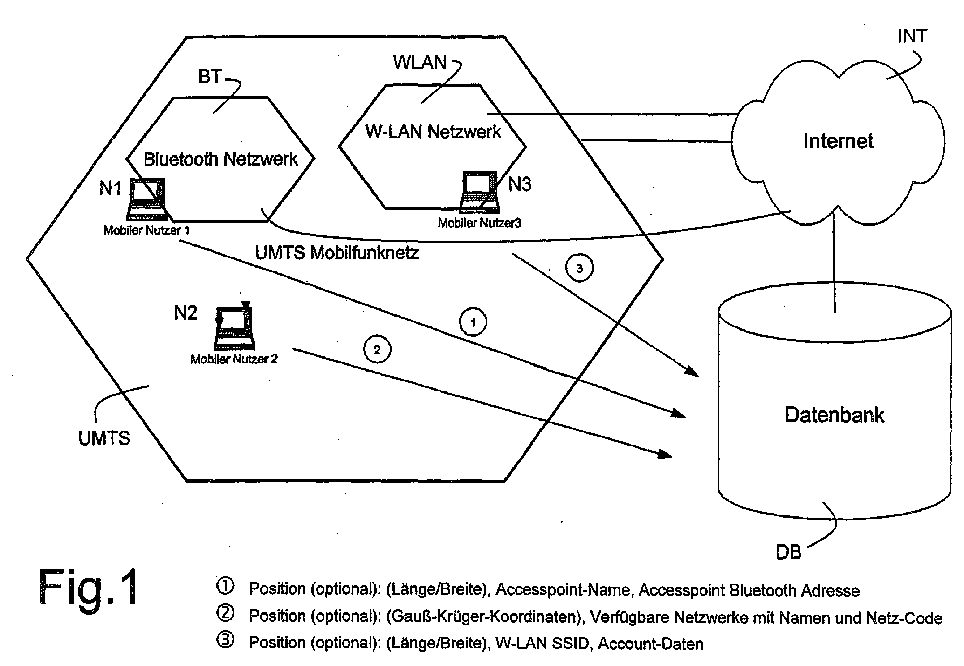

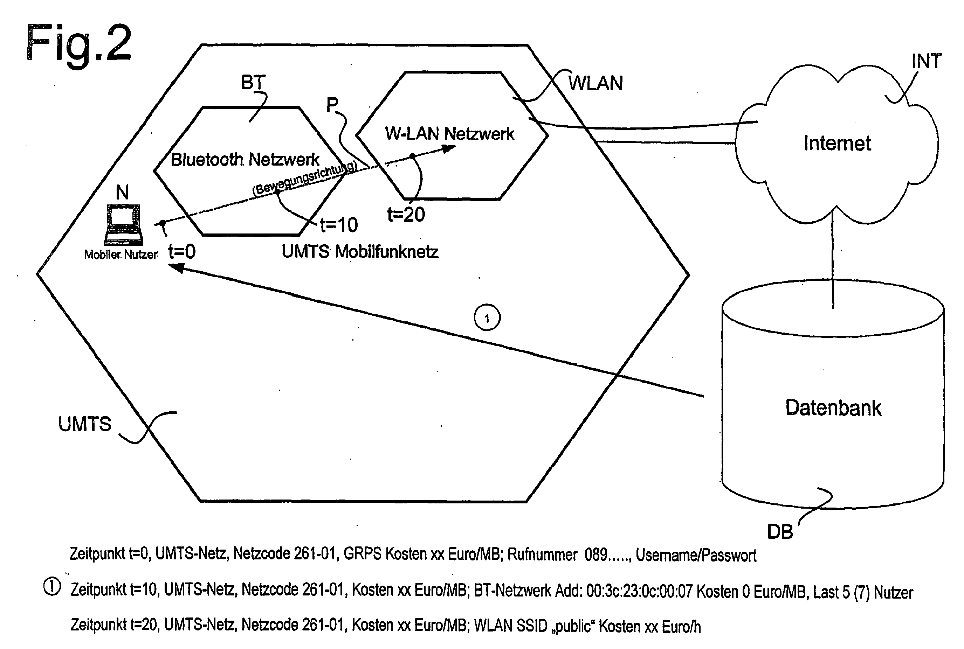

In dem in Fig.1 und Fig.2 schematisch veranschaulichten Beispiel ist ein Versorgungsbereich UMTS eines UMTS-Mobilfunknetzes dargestellt. Innerhalb des Versorgungsbereichs UMTS dieses UMTS-Mobilfunknetzes befinden sich noch ein Bluetooth-Funknetzwerk BT und ein Wireless-LAN-Funknetzwerk WLAN. Das UMTS-Mobilfunknetz, das Bluetooth-Funknetzwerk und das W-LAN-Funknetzwerk weisen unterschiedliche physikalische Zugangstechnologien auf.

Entsprechend dem in Fig.1 dargestellten Beispiel befinden sich drei mobile Nutzer N1, N2 und N3 mit ihren Funk-Kommunikationsendgeräten im Versorgungsbereich UMTS des UMTS-Mobilfunknetzes. Die Funk-Kommunikationsendgeräte der drei mobilen Nutzer N1, N2 und N3 greifen über eine der verschiedenen verfügbaren Netzwerkanbindungen UMTS, BT, WLAN und WiMax und das Internet INT auf eine zentrale, netzübergreifende Datenbank DB zurück. Diese Datenbank DB soll alle am augenblicklichen Ort der Nutzer N1, N2 und N3 erreichbaren Funknetze und deren Zugangsparameter als Informationen enthalten.

Als Informationen können dort auch die jeweiligen Netzeigenschaften und orts-, zeit- und lastabhängige Netzverfügbarkeitsinformationen aufgenommen werden. In dem in Fig.1 dargestellten Beispiel erfolgt die Befüllung der Datenbank DB mit diesen Informationen durch Beobachtungen und Feedback der drei mobilen Nutzer N1, N2 und N3, die sich in den Versorgungsbereichen der drei Netzwerke UMTS, BT und WLAN befinden.

Der erste mobile Nutzer N1 beobachtet in seiner Position, dass neben dem Zugang zum UMTS-Funknetz UMTS dort optional Zugang zu einem Bluetooth-Funknetzwerk BT vorhanden ist und teilt als Feedback-Information ① der Datenbank DB diese Beobachtung einschließlich der geographischen Länge/Breite, des Accesspoint-Namens und der Accesspoint-Adresse mit.

Der zweite mobile Nutzer N2 beobachtet in seiner Position, dass dort Zugriff auf ein UMTS-Mobilfunknetz UMTS vorhanden ist und teilt als Feedback-Information ② der Datenbank DB diese Beobachtung einschließlich der geographischen Gaußkrüger-Koordinaten und des Namens sowie des Netzcodes des verfügbaren UMTS-Funknetzes UMTS mit.

Der dritte mobile Nutzer N3 beobachtet in seiner Position, dass dort neben dem Zugang zum UMTS-Funknetz UMTS optional Zugang auf ein W-LAN-Funknetzwerk WLAN vorhanden ist und teilt als Feedback-Information ③ der Datenbank DB diese Beobachtung einschließlich der geographischen Länge/Breite, der betreffenden W-LAN SSID und der Account-Daten des dort verfügbaren W-LAN-Funknetzwerkes WLAN mit. Die mobilen Nutzer N1, N2 und N3 haben über die verfügbaren Funknetze Zugang zum Internet INT und zur Datenbank DB.

Es wird noch darauf hingewiesen, dass die Befüllung der Datenbank DB mit Informationen grundsätzlich auch durch Betreiber der Netzwerke UMTS, BT, WLAN und WiMax erfolgen kann und nicht durch Beobachtungen und Feedback der mobilen Nutzer N1, N2 und N3 vorgenommen werden muss.

Auf der Grundlage dieser aus der Datenbank DB erhaltenen Informationen kann dann mittels eines Programms auf dem Funk-Kommunikationsendgerät eines mobilen Nutzers N das jeweils geeignete Zugangsfunknetz ohne weitere notwendige Interaktionen des Nutzers N ausgewählt werden. Fig.2 zeigt in diesem Zusammenhang schematisch an die Datenbank DB gerichtete Anfragen des sich auf einem gestrichelt dargestellten Pfad P in der durch einen Pfeil gekennzeichneten Bewegungsrichtung fortbewegenden Nutzers N nach verfügbaren Funknetzen in seiner Umgebung zu verschiedenen Zeitpunkten (t=0), (t=10) und (t=20). Im Beispiel gibt die Datenbank DB dem mobilen Nutzer N die Information ①, dass bei der dargestellten Bewegung des Nutzers N zum Zeitpunkt (t=0) ein UMTS-Funknetz UMTS zugänglich ist, das zur Nutzung folgende Parameter aufweist: Netzcode 261-01, GRPS-Kosten xx €/MB; ISP A, Rufnummer 089...., Username/Passwort. Die Information ① gibt außerdem an, dass zum Zeitpunkt (t=10) das gleiche UMTS-Funknetz UMTS mit dem Netzcode 261-01 und GRPS-Kosten von xx €/MB und außerdem ein Bluetooth-Funknetzwerk BT mit folgenden Parametern zugänglich sind: Addr:00:3c:23:0c:00:07, Kosten 0 €/MB, Last 5(7) Nutzer. Des weiteren gibt die Information ① an, dass zum Zeitpunkt (t=20) ebenfalls das gleiche UMTS-Funknetz UMTS mit dem Netzcode 261-01 und GRPS-Kosten von xx €/MB, aber darüber hinaus noch ein W-LAN-Funknetzwerk WLAN mit folgenden Parametern zugänglich ist: SSID "public", Kosten xx €/h.

### Bezugszeichenliste

- BT: Bluetooth-Funknetzwerk
- DB: Datenbank
- INT: Internet
- N; N1, N2, N3: Nutzer
- P: Pfad
- UMTS: Versorgungsbereich UMTS-Funknetz
- WLAN: Wireless-LAN-Funknetzwerk

## Patentansprüche

1. Verfahren zum Durchführen von Handover- und Roaming-Prozeduren zwischen einem mobilen Funk-Kommunikationsendgerät eines Nutzers und Zugriffsstationen, die verschiedenen, unterschiedlich verwalteten und/oder zugangstechnologisch unterschiedlich ausgelegten Funknetzen angehören können, **dadurch gekennzeichnet, dass** das mobile Funk-Kommunikationsendgerät des Nutzers (N; N1, N2, N3) über eine beliebige verfügbare Netzwerkanbindung auf eine zentrale, netzübergreifende Datenbank (DB) zurückgreift, in der alle am augenblicklichen Ort des Nutzers erreichbaren Funknetze (UMTS, BT, WLAN, WiMax) und deren Zugangsparameter als Informationen enthalten sind, dass die Befüllung der Datenbank mit diesen Informationen entweder durch deren Betreiber oder durch Beobachtungen und Feedback derjenigen mobilen Funk-Kommunikationsgeräte oder Zugriffsstationen vorgenommen wird, die das Verfahren einsetzen, und dass auf der Grundlage dieser aus der Datenbank erhaltenen Informationen das jeweils geeignete Zugangsfunknetz ohne weitere notwendige Interaktionen des Nutzers ausgewählt wird.

2. Verfahren nach Anspruch 1, **dadurch gekennzeichnet, dass** in der zentralen, netzübergreifenden Datenbank (DB) außer den dort registrierten Funknetzen (UMTS, BT, WLAN, WiMax) und deren Zugangsparametern als Informationen auch noch die Netzeigenschaften der verschiedenen registrierten Funknetze und deren orts-, zeit- und lastabhängige Netzverfügbarkeitsmerkmale aufgenommen werden.

3. Verfahren nach Anspruch 1 oder 2, **dadurch gekennzeichnet, dass** zur gezielten Auswahl eines Funknetzes (UMTS, BT, WLAN, WiMax) "Nachbarschaftslisten" für mobile Funk-Kommunikationsendgeräte von einer zentralen Instanz auf Anfrage des mobilen Nutzers (N) für einen bestimmten Ort bereitgestellt werden.

4. Verfahren nach Anspruch 1, **dadurch gekennzeichnet, dass** die auf der Grundlage der aus der Datenbank erhaltenen Informationen mittels eines Programms auf dem mobilen Funk-Kommunikationsgerät des Nutzers das jeweils geeignete Zugangsfunknetz ausgewählt wird.

5. Verfahren nach einem der vorhergehenden Ansprüche, **dadurch gekennzeichnet, dass** über eine Schnittstelle Optimierungsverfahren zur Auswahl eines Funknetzes (UMTS, BT, WLAN, WiMax) integriert werden.

6. Verfahren nach Anspruch 5, **dadurch gekennzeichnet, dass** das Optimierungsverfahren die höchstmögliche Verfügbarkeit der beteiligten Funknetze (UMTS, BT, WLAN) betrifft.

7. Verfahren nach Anspruch 5, **dadurch gekennzeichnet, dass** das Optimierungsverfahren die niedrigsten Übertragungskosten der beteiligten Funknetze (UMTS, BT, WLAN, WiMax) betrifft.

8. Verfahren nach einem der vorhergehenden Ansprüche, **dadurch gekennzeichnet, dass** in der Datenbank (DB) zwischen Netzbetreibern und Internet-Service-Anbietern unterschieden wird, so dass günstige lokale Internetzugänge gegenüber netzweiten Zugängen eines oder mehrerer Betreiber bevorzugt werden können.

9. Verfahren nach einem der vorhergehenden Ansprüche, **gekennzeichnet durch** eine Verwendung in zellularen Mobilfunknetzen, wie z.B. in GSM-Netzen oder UMTS-Netzen, und in Kurzreichweitenfunknetzen, wie z.B. in Bluetooth-Netzen, Wireless LAN-Netzen oder HomeRF-Netzen.
